# EUROPEAN PATENT APPLICATION

(11) **EP 1 205 443 A1**
(43) Date of publication of application: **15.05.2002**
(21) Application number: 01309374.5
(22) Date of filing: 06.11.2001
(51) Int. Cl.: C02F 3/28

(54) **Biological anaerobic fluidised bed apparatus**

(30) Priority: 07.11.2000 US 839653
(71) Applicant: International Waste Management Systems plc, Harrow HA1 2AW, Middlesex (GB)
(72) Inventor: Josse, Juan Carlos, Capistrano Beach, California 92624 (US); Sutherlin, John William, New Orleans, Louisiana 70119 (US)
(74) Representative: Fairbairn, Angus Chisholm

(57) **Abstract**

A biological fluidised bed apparatus for the treatment of wastewater comprises: a reactor tank having a conical bottom with angles ranging from 30 to 80 degrees from the horizontal; an inert media bed within said tank; and a recirculation pipe within said tank having an upper inlet, and a lower conformed outlet fitting within said media. The apparatus is self-contained, and offers easy and uniform expansion for various types of commercially available media. Besides the biological treatment accomplished within the fluidised bed, this reactor provides mechanical solids/gas/liquid separation and upflow sludge blanket clarification to improve effluent quality. Preferred additional features of the apparatus are a rotating surface skimmer and an excess sludge collection and thickening device powered by an externally mounted drive. With this reactor configuration, anaerobic and anoxic biological treatment and subsequent clarification are achieved in a single enclosed tank.

## Description

This invention pertains to a biological fluidised bed apparatus to treat wastewater. More particularly, the invention relates to the design of the apparatus and its components.

Over the last twenty years, extensive research has been done in the US, Europe and Japan to develop various fluidised bed reactor configurations and processes. Important patented contributions in this field are disclosed in: US-A-4,482,458 (Rovel, et al.); US-A-4,940,546 (Vogelpohl, et al.); US-A-5,441,634 (Edwards); US-A-4,530,762 (Love); US-A-4,762,612 (Yoda, et al.); US-A-5,573,671 (Klein); US-A-5,942,116 (Clark, et al.).

Biological fluidised bed reactors have been widely used to remove dissolved and suspended organic matter from high-strength industrial effluents. In this application, the biological beds are comprised of anaerobic bacteria. Anoxic fluidised bed reactors have also been used for the removal of nitrate from industrial and municipal effluents, in which case the biological bed is comprised of denitrifying bacteria.

In the anaerobic application, these reactors convert dissolved and suspended organic matter into methane and carbon dioxide (biogas). The conversion is accomplished by anaerobic bacteria, which grow attached as biofilm to inert media particles in the fluidised bed. The reduction of organic matter in the treated waste is the result of a combination of physical retention of suspended and colloidal organic matter by solids contact flocculation within the biological bed, hydrolysis of the trapped solids by hydrolyzing bacteria present in the anaerobic consortium, and finally biological conversion of dissolved organic matter into biogas by acidogenic and then methanogenic bacteria.

In the anoxic application, these reactors convert nitrate into nitrogen gas. The conversion of nitrate to nitrogen gas is accomplished by denitrifying bacteria that grow attached to inert media particles in the fluidised bed. These heterotrophic bacteria are ubiquitous in most natural waters. In the process of denitrification, nitrate acts as an electron acceptor and an organic substrate as a reduced electron donor. The substrate used as an electron donor and a source of carbon is a readily degradable organic substrate (i.e., methanol, sugars or acetic acid), which is supplemented to the anoxic reactor.

The fluidised bed reactors in use employ an attached biofilm fluidised bed process that is based on the concept that large biomass concentrations can be achieved on a large surface area by dense biofilm attachment to an inert small particle size carrier. A large surface area is created by small inert particles in a bed, fluidised by upward flow. The intense mixing occurring in the bed minimises diffusion limitations and eliminates clogging and short-circuiting problems. These reactors accumulate large amounts of active biomass, and can achieve very long cell detention times.

Existing fluidised bed reactors consist of a cylindrical column with flat bottom. These columns contain a bed of small inert particles, 0.4-1.0 mm zeolite, diatomaceous earth, or activated carbon particles. The bed is fluidised by the upward flow through the column of untreated wastewater mixed with recirculated effluent. In existing reactors, the upward flow necessary to achieve bed fluidisation is distributed by means of various nozzles or small diameter pipes placed at the bottom of the column. Anaerobic biofilm develops on the inert media and the physical attachment of anaerobic bacteria to the media surface prevents biomass washout. The high fluid shear force resistance of biofilms allows these reactors to be operated at upflow velocities which would otherwise wash out unattached biomass.

Upflow velocities are set by the recirculation flow, according to the fluidisation properties of the bio-particles (e.g., inert particles with attached bacterial film). The upflow velocities are sufficient to reach bed expansions as to allow free release of generated gas bubbles. The degree of bed expansion is achieved by controlling the recirculation flow rate of a portion of the effluent in a closed loop.

Under some conditions the turbulent flow exerts sufficient shear to prevent the development of thick biofilms on the media, which limit mass transfer. The high surface-to-volume ratio of the bulk of the bed inert media (300 to 2500 ft²/ft³) creates a vast area for the development of microbial biofilm. Approximately 95 percent of the active biomass in a well-operated fluidised bed reactor is attached growth. This fact enables the development of dense but thin biofilms that lead to high concentrations of attached biomass in the bed.

Despite the great advantages that this process offers in terms of high organic loading rates, short hydraulic retention times and low excess solids generation, the use of these reactors has not been extensive due to various design limitations. The most common problems reported in full-scale applications and their effects on operation and effluent quality are:
**(a) Inadequate flow distribution at the bottom of the bed**
   In current fluidised bed reactor configurations, clogging of distribution nozzles and the existence of "dead zones," channeling and short-circuiting inside the bed are major disadvantages. Good flow distribution is necessary to achieve uniform and controlled bed expansion and a well-mixed flow pattern inside the bed. Such patterns promote turbulence at the biofilm/liquid interface and enable all the attached biomass to be in contact with the waste.
   When a uniform expansion of the bed is obtained, biogas bubbles generated in the bed are evenly released. This avoids the coalescence of small bubbles into much larger bubbles that disrupt the bed as they rise. Such bed disruptions deteriorate the quality of the effluent by releasing solids trapped within the bed.
   Although the solution to inadequate bed expansion would appear to be increasing the recirculation flow in order to achieve higher upflow velocity, this presents the disadvantage of washing solids trapped in the bed, by the high interstitial velocities created by the increased flow. These solids deteriorate the quality of the effluent.
**(b) Need for highly uniform particle size media in cylindrical reactor configurations**
   In cylindrical, flat bottom reactors, the inert media must have a highly uniform particle size. Typical media materials are zeolite, sand, and activated carbon. Commercially available media are not highly uniform in particle size. A more uniform particle size media has a higher cost, since narrow particle size range sieving produces more wasted material for the media manufacturer.
   Since the upflow velocity in cylindrical reactors is constant throughout the bed, the existence of various particle sizes affects uniform expansion. Larger particles weigh more and have higher terminal settling velocities. Thus, higher upflow velocities are required to keep them suspended. If there is a range in the particle size of the media, at the upflow velocity necessary to expand the large particles the small particles are carried out of the bed, or are over-expanded. On the other hand, at an upflow velocity at which small media particles reach adequate fluidisation, large particles remain unexpanded at the bottom of the reactor, creating a plug and hindering uniform expansion.
**(c) Inadequate solids/gas/liquid separation within the reactor**
   Before the treated effluent exits the top of the reactor, suspended solids need to be removed. The rising bubbles above the bed create a drag effect that helps carry suspended solids to the top of the reactor. Gas bubbles also tend to trap suspended solids, which are attracted by the surface tension of the bubbles. In several reactors without an appropriate incorporated solids separation system organic loadings are kept below the reactor's capacity in order to reduce gas generation as a measure to limit suspended solids concentrations in the effluent. In several reactor configurations, additional equipment such as external clarifiers is used to polish the effluent.
   Many industrial and farm wastes produce a scum layer at the water surface inside the reactor. This layer of floating grease and organic material needs to be removed so that it does not accumulate or appear in the effluent. To the extent of our search and experience, no current biological fluidised bed reactor in use, presents a surface skimmer and an effluent launderer to achieve this objective.
**(d) Difficulty in removing excess solids from the reactor**
   Anaerobic bacteria are slow growers, however as a result of substrate consumption there is biomass growth. Thus, there is a need to accumulate and store detached biomass inside the reactor and to remove it for disposal. It is important to provide sufficient solids retention time inside anaerobic reactors, in order to achieve adequate digestion of the excess solids produced. This eliminates the need for further sludge stabilisation outside the reactor. However, failure to accumulate and remove excess biomass without disturbing the operation of the reactor, will affect the performance of the unit and the quality of the effluent.

The biological fluidised bed apparatus according to the present invention provides a modular, self-contained biological reactor, which can treat municipal, industrial and confined animal feedlot wastewater at high loading rates. This reactor design overcomes the limitations and disadvantages of prior fluidised bed reactor configurations by means of its shape and internal components. As a result, it provides better quality effluent, requires less "foot print" area for installation and demands less maintenance.

The apparatus overcomes several disadvantages of current fluidised bed reactor configurations. The improvements in this apparatus' design include:
A. Uniform flow distribution at the bottom of the bed. This is achieved using a reactor tank with a conical bottom 30 to 70 degrees from the horizontal (inverted truncated cone), and a single internal down-coming pipe discharging recirculated flow at the bottom of the cone. Preferably, the conical bottom has an angle in the range from 45 to 75 degrees, more preferably from 55 to 72 degrees, particularly preferably from 57 to 70 degrees, for example 60 degrees. In order to limit turbulence at the bottom of the reactor, the flow exits the pipe radially by means of a conformed outlet defining a flow distribution fitting. The flow distribution fitting is preferably moulded. This fitting, which changes the direction of the flow from vertical to radial, is contoured internally to reduce friction losses and smoothen the change of direction of the flow lines. The open area of the flow distribution fitting is such that exit velocities are sufficiently high to drag the larger bioparticles located at the bottom of the reactor. The required drag velocity is achieved at a flow sufficient to create the upflow velocity required for the minimum admissible bed expansion. The flow distribution design eliminates nozzle clogging, since a single fitting is used instead of a network of multiple small diameter nozzles. With this design, no channeling or "dead zones" form in the bed. Additionally, bed expansion is uniform and can be controlled very precisely by adjusting the recirculation flow. A more uniform fluidisation enables gas bubbles to be released evenly throughout the section of the bed.
B. Media with a lower particle size uniformity coefficient can be efficiently fluidised. The conical bottom reactor design allows a wider range of particle sizes in the media to be fluidised, as a result of the various upflow velocities occurring through the conical portion of the reactor. At a constant recirculation flow, upflow velocities gradually decrease from the bottom of the inverted cone through the cylindrical portion of the tank. This is a result of the change in sectional area of the conical portion. Having various upflow velocities in the lower section of the reactor accommodates the use of media with a wider range of particle sizes. Larger, heavier particles will concentrate towards the bottom of the cone, where higher upflow velocities occur due to reduced cross-sectional area. Accordingly, smaller, lighter particles will accumulate in the upper section of the cone, which has lower upflow velocities. This feature enables the use of biofilm support media with less uniform particle size. This reduces the cost of the media since it can be purchased as a readily available commercial product.
C. Solids carry-over with the reactor effluent can be greatly minimised. The apparatus configuration preferably includes an internal downflow solids/gas/liquid separator at the top of the unit. Solids are normally carried out of the bed along with small nitrogen or biogas bubbles resulting from methanogenic or denitrification bacterial activity, depending on the application. A gradual reduction of the sectional area of the flow path in the upper section of the reactor forces gas bubbles to coalesce into larger bubbles. These bubbles exit the liquid at higher velocity leaving attached solids in the liquid stream. Liquid is forced to flow downward at high velocity along the sloped wall of the separator, into a submerged trough. The upflow velocity above the trough is extremely low, such that the solids are not picked up from the trough. A slow-rotating paddle sweeps the trough and pushes most of the solids into one or more, for example two, collection boxes connected to the intake of the recirculation pump. This way, most of the solids retained in the separator are forced to re-enter the bed. A portion of the separated solids is pushed into one or more, for example two, other deeper collection boxes for accumulation, thickening and periodic wasting. Thickened solids sludge is removed from these boxes, preferably by means of electrically actuated valves operating on timers. Additionally, the reactor preferably includes a quiescent clarification zone, external to the separator.
   Gas bubbles are isolated from the clarification zone and do not interfere with this process. The clarification zone has a gradual increase in cross-sectional area. Thus, it operates as an upflow solids contact clarifier. On top of the clarification zone, an effluent trough disposed on the perimeter of the reactor collects the effluent overflow. An effluent launderer, installed along the trough, retains floating solids. A slow-rotating skimmer arm connected to the same sweeping mechanism of the submerged trough, pushes scum and floating solids on the surface of the water into a scum box. Scum and floatables collected in this box are removed by means of an electrically actuated valve. A submerged solids overflow port allows for periodic sludge blanket wastage. This internal solids/gas/liquid separator provides a reliable means for separation of the three phases. The separator provides an enclosed volume above the surface of the water for the accumulation and removal of biogas.

The advantages noted above and other benefits of the biological fluidised bed apparatus of the present invention over the prior art will become apparent from a consideration of the following descriptions and drawings, in which:
Figure 1 is a general orientation showing shape and cutting planes for sectional views, wherein the figure shows top and side views of the biological fluidised bed apparatus with main ports;
Figure 2 shows sectional view A-A of the biological fluidised bed apparatus, including its steel stand, ladder, safety railing and external drive for the solids collection paddle and surface skimmer arm, wherein the overall external dimensions of the reactor are presented;
Figure 3 shows sectional view B-B of the biological fluidised bed apparatus, wherein details of the return solids and waste solids collection boxes, as well as the incoming PVC line part of the recirculation and feed system, are shown;
Figure 4 shows sectional view A-A of the biological fluidised bed apparatus and labels most components:
Figure 5 shows sectional view A-A of the biological fluidised bed apparatus with a schematic representation of direction of the flow through the fluidised bed and through the solids/gas/liquid separator, wherein the operation of the unit is shown;
Figures 6-1 and 6-2 are fabrication drawings showing detailed dimensions of the solids trough and lower portion of the solid/gas/liquid separator, and the lower body of the biological fluidised bed apparatus;
Figures 7-1, 7-2 and 7-3 are fabrication drawings showing the upper body of the apparatus, as well as the upper component of the solid/gas/liquid separator and effluent trough;
Figure 8 is a fabrication drawing that shows the moulded flow distribution fitting; and
Figure 9 is an isometric sketch of an installed biological fluidised bed apparatus, wherein basic piping, recirculation pump, and wastewater feed connections are depicted.

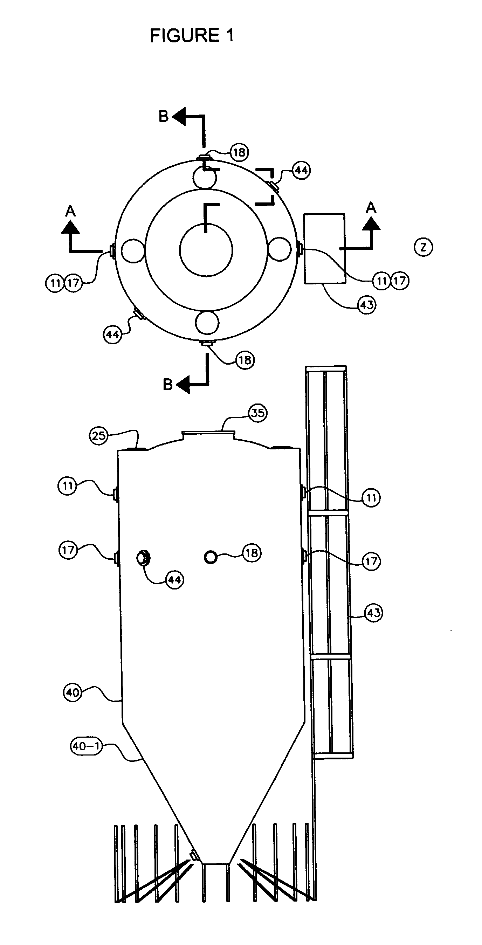

In Figures 1 to 9, the reference numerals and letters represent features or dimensions as follows:

### Figure 1. Side and top views:

### Cutting planes and orientation

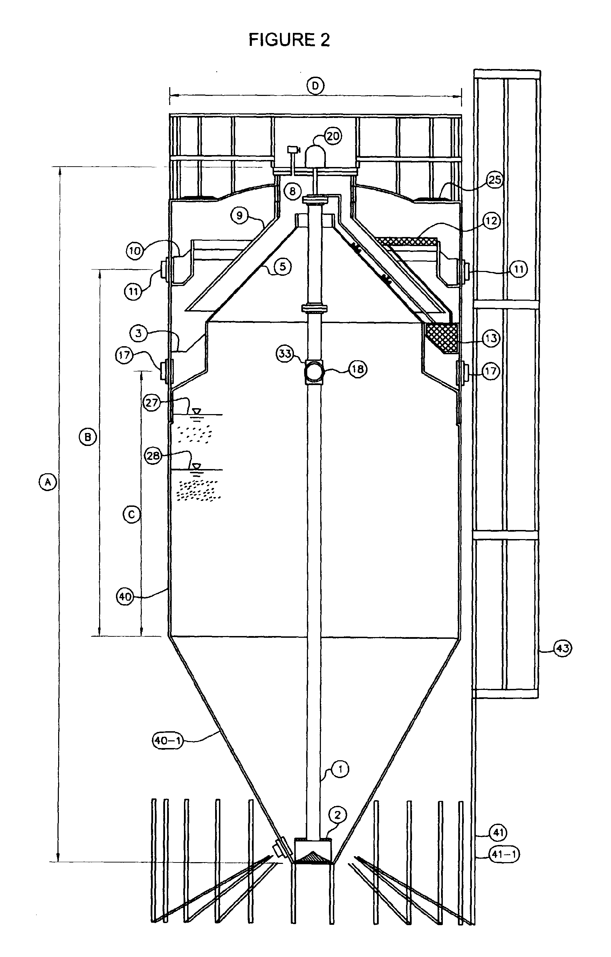

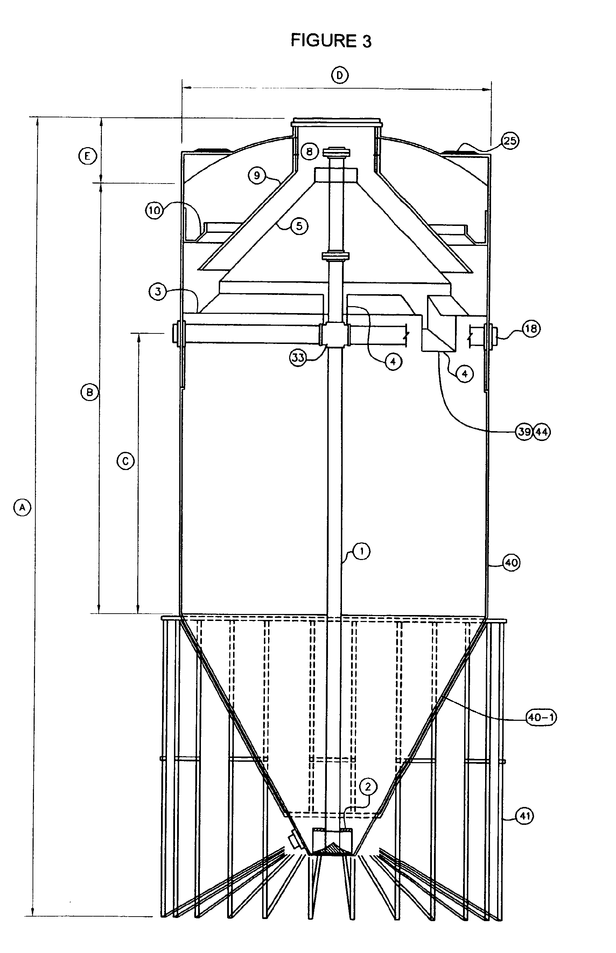

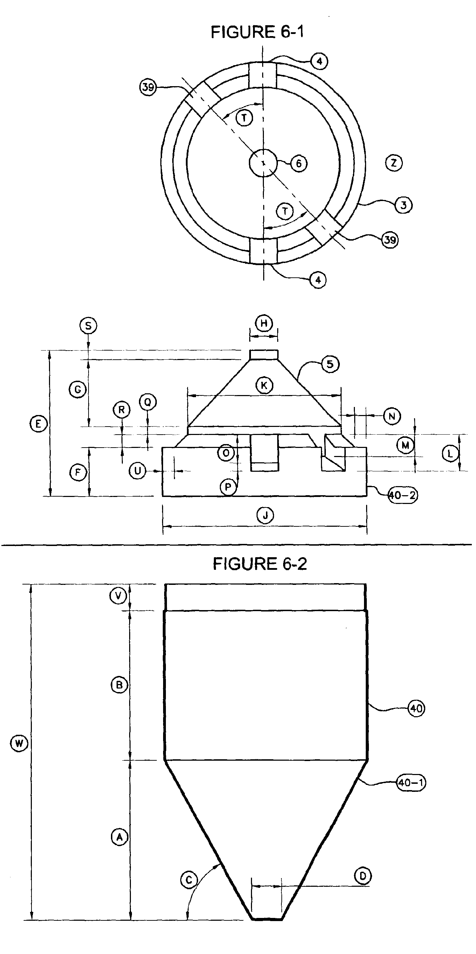

- A-A: Cutting plane used for sections in Figures 2, 4, and 5
- B-B: Cutting plane used for sections in Figure 3
- Z: Orientation point for proper placement of component 6 in Figure 6-1

### Components

- 11: Effluent line connection (bulkhead fitting). Two locations

- 17: Recirculation line suction connection. Bulkhead fitting connects to suction of recirculation pump. Two locations
- 18: Recirculation line discharge connection. Bulkhead fitting connects to discharge of recirculation pump. Two locations
- 25: Access covers for reactor surface and effluent trough clean out. Access covers to upper portion of reactor. Four locations
- 35: Removable cover
- 40: Reactor tank, cylindrical middle portion
- 40-1: Reactor tank, conical bottom portion
- 43: Safety ladder
- 44: Excess solids wastage port (bulkhead fitting). Two locations

### Figure 2. Sectional view A-A:

### Dimensions

- A: 7848 mm
- B: 4166 mm
- C: 2997 mm
- D: 3556 mm

### Components

- 1: Recirculation and feed flow discharge pipe
- 2: Flow distribution moulded fitting
- 5: Gas deflector, part of solids/gas/liquid separator
- 8: Gas storage chest
- 9: Recirculation flow deflector, part of solids/gas/liquid separator
- 10: Effluent trough
- 11: Effluent line connection (bulkhead fitting). Two locations
- 12: Surface skimmer arm
- 13: Solids collection paddle. Sweeps at low speed the solids collection trough
- 17: Recirculation line suction connection. Bulkhead fitting connects to suction of recirculation pump. Two locations
- 18: Recirculation line discharge connection. Bulkhead fitting connects to discharge of recirculation pump. Two locations
- 20: Motor-reducer unit to power solids paddle and surface skimmer
- 25: Access covers for reactor surface and effluent trough clean out. Access covers to upper portion of reactor. Four locations
- 27: Fluidised bed level. Media expands to this level when recirculation system is in operation
- 28: Settled media level. Media level without recirculation flow
- 33: PVC cross fitting with reducers. Part of flow recirculation system
- 40: Reactor tank, cylindrical middle portion
- 40-1: Reactor tank, conical bottom portion
- 41: Reactor tank metal base
- 41-1: Metal base shown partially for clarity of reactor details
- 43: Safety ladder

### Figure 3. Sectional view B-B:

### Dimensions

- A: 8788 mm
- B: 4725 mm
- C: 2997 mm
- D: 3556 mm
- E: 686 mm

### Components

- 1: Recirculation and feed flow discharge pipe
- 2: Flow distribution moulded fitting
- 3: Carry-over solids collection trough
- 4: Return solids accumulation box. Two locations
- 5: Gas deflector, part of solids/gas/liquid separator
- 8: Gas storage chest
- 9: Recirculation flow deflector, part of solids/gas/liquid separator
- 10: Effluent trough
- 18: Recirculation line discharge connection. Bulkhead fitting connects to discharge of recirculation pump. Two locations
- 25: Access covers for reactor surface and effluent trough clean out. Access covers to upper portion of reactor. Four locations
- 39: Wastage solids accumulation and thickening box
- 40: Reactor tank, cylindrical middle portion
- 40-1: Reactor tank, conical bottom portion Reactor tank metal base
- 42: Excess solids wastage port, bulkhead fitting in box 39 not shown. Two locations

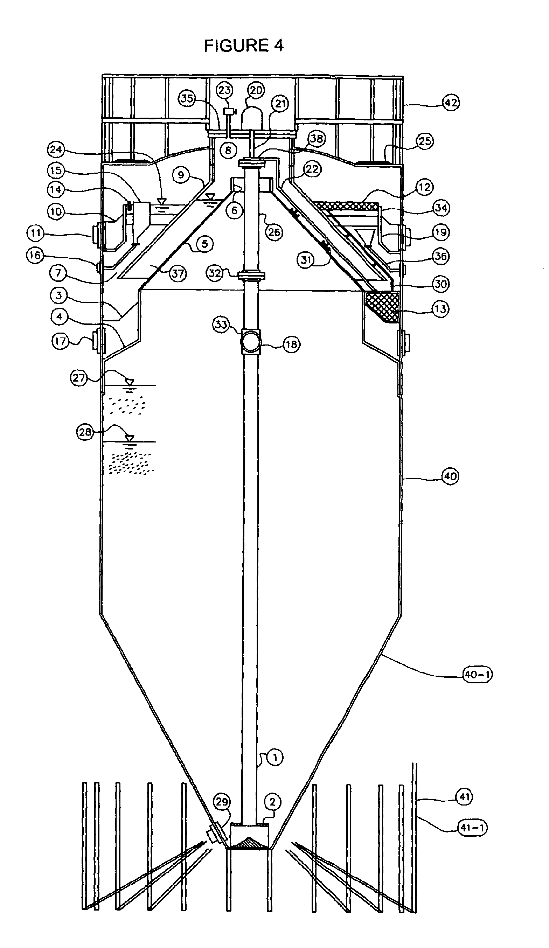

### Figure 4. Sectional view A-A:

### Components

- 1: Recirculation and feed flow discharge pipe
- 2: Flow distribution moulded fitting
- 3: Carry-over solids collection trough
- 4: Return solids accumulation box. Two locations
- 5: Gas deflector, part of solids/gas/liquid separator
- 6: Gas bubble-coalescence collar, part of solids/gas/liquid separator
- 7: Upflow clarification quiescent zone (sludge blanket to form in this section)
- 8: Gas storage chest
- 9: Recirculation flow deflector, part of solids/gas/liquid separator
- 10: Effluent trough
- 11: Effluent line connection (bulkhead fitting). Two locations
- 12: Surface skimmer arm
- 13: Solids collection paddle. Sweeps at low speed the solids collection trough
- 14: Effluent launderer. Placed around effluent overflow weir
- 15: Scum and floatables collection box. One location
- 16: Scum and floatables wastage pipe connection (bulkhead fitting). One location
- 17: Recirculation line suction connection. Bulkhead fitting connects to suction of recirculation pump. Two locations
- 18: Recirculation line discharge connection. Bulkhead fitting connects to discharge of recirculation pump. Two locations

- 19: Effluent trough box. Accommodates effluent bulkhead fitting. Two locations
- 20: Motor-reducer unit to power solids paddle and surface skimmer
- 21: Power transmission mechanism. Splined shaft
- 22: Rotating arm connecting splined shaft to solids collection paddle
- 23: Gas release valve
- 24: Water level inside reactor
- 25: Access covers for reactor surface and effluent trough clean out. Access covers to upper portion of reactor. Four locations
- 26: Support pipe for rotating mechanism of solids paddle and surface skimmer
- 27: Fluidised bed level. Media expands to this level when recirculation system is in operation
- 28: Settled media level. Media level without recirculation flow
- 29: Bulkhead fitting for media removal and emergency fluidisation with booster pump when bed becomes compacted
- 30: Arm driving surface skimmer. Connected to arm 22
- 31: Plastic rollers to support load of rotating arms. Rollers move in contact with upper surface of part 5
- 32: Blind flange and PVC reducer. Supports base pipe 26
- 33: PVC cross fitting with reducers. Part of flow recirculation system
- 34: Effluent overflow weir
- 35: Removable cover
- 36: Internal weir for sludge blanket level control. Connection pipe and bulkhead fitting. One location
- 37: Down-flow passage of separator
- 38: Rotating hub with axial bearing. Driven by shaft 21
- 40: Reactor tank, cylindrical middle portion
- 40-1: Reactor tank, conical bottom portion
- 41: Reactor tank metal base
- 41-1: Metal base shown partially for clarity of reactor details
- 42: Safety railing

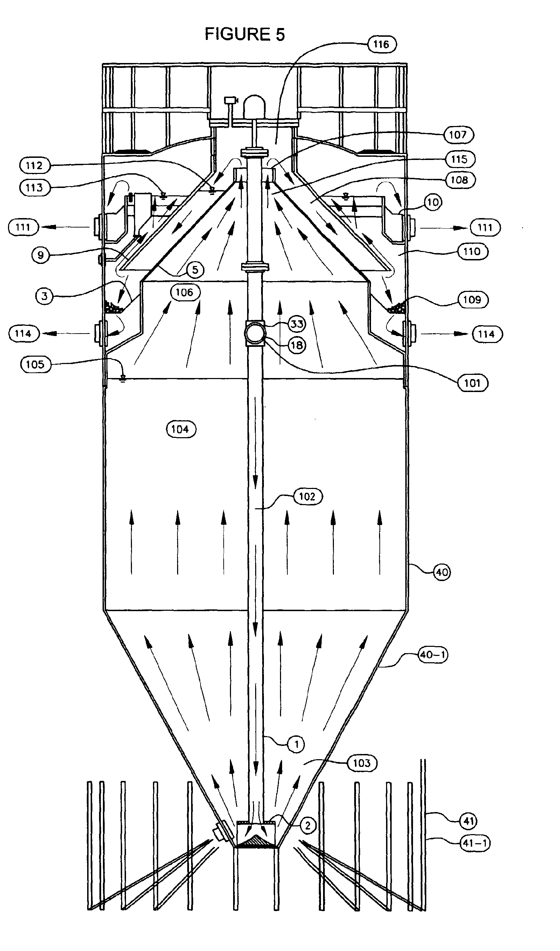

### Figure 5. Sectional view A-A:

### Components

- 1: Recirculation and feed flow discharge pipe
- 2: Flow distribution moulded fitting
- 3: Carry-over solids collection trough
- 5: Gas deflector, part of solids/gas/liquid separator
- 9: Recirculation flow deflector, part of solids/gas/liquid separator
- 10: Effluent trough
- 18: Recirculation line discharge connection. Bulkhead fitting connects to discharge of recirculation pump. Two locations
- 33: PVC cross fitting with reducers. Part of flow recirculation system
- 40: Reactor tank, cylindrical middle portion
- 40-1: Reactor tank, conical bottom portion
- 41: Reactor tank metal base
- 41-1: Metal base shown partially for clarity of reactor details

### Description of operation

- 101: Recirculation and raw waste into reactor
- 102: Recirculation and raw waste flow into bottom of reactor
- 103: High velocity area for fluidisation of larger media particles
- 104: Low velocity area for fluidisation of finer media particles.
- 105: Fluidised bed level. Bed-liquid interface
- 106: Water, gas and suspended solids
- 107: Treated water overflow into solids separation zone
- 108: Downward flow deflector zone. Treated water with suspended solids flow into solids collection trough forced by suction of recirculation pump
- 109: Separated solids accumulate in trough. Solids collection paddle sweeps trough at low speed pushing solids into recirculation and wastage boxes.
- 110: Quiescent solids contact clarification zone. Solids separation by means of sludge blanket formed in this area
- 111: Treated effluent discharge port
- 112: Water level in solids separator
- 113: Water level in reactor dictated by height of effluent overflow weir
- 114: Recirculation port out of reactor. Bulkhead fitting connects to suction of recirculation pump. Treated water prior to solids separation exits reactor along with suspended solids and reenters at the bottom of the bed.
- 115: Contraction to enable coalescence of fine gas bubbles to enhance gas/liquid separation.
- 116: Gas storage volume. Gas is removed through valve 23.

### Figure 6-1. Detail of lower portion of solids separator and trough:

### Cutting planes and orientation

- Z: Point of orientation for figure

### Dimensions

- E: 2260 mm
- F: 686 mm
- G: 1092 mm
- H: 508 mm
- J: 3505 mm
- K: 2743 mm
- L: 660 mm
- M: 432 mm
- N: 178 mm
- O: 559 mm
- P: 102 mm
- Q: 127 mm
- R: 229 mm
- S: 152 mm
- T: 43 degree offset angle between centrelines of recirculation and solids wastage boxes.
- U: 178 mm

### Components

- 3: Carry-over solids collection trough
- 4: Return solids accumulation box. Two locations
- 5: Gas deflector, part of solids/gas/liquid separator
- 6: Gas bubble-coalescence collar, part of solids/gas/liquid separator
- 39: Wastage solids accumulation and thickening box
- 40-2: Portion of cylindrical section of reactor tank to join with lip of part 40

### Figure 6-2. Detail of conical bottom portion of reactor tank:

### Dimensions

- A: 2692 mm
- B: 2413 mm
- C: Angle ranging from 30 to 80 degrees, most preferably 57 to 70 degrees
- D: 432 mm
- V: 152 mm
- W: 5258 mm

### Components

- 40: Reactor tank. cylindrical middle portion
- 40-1: Reactor tank, conical bottom portion

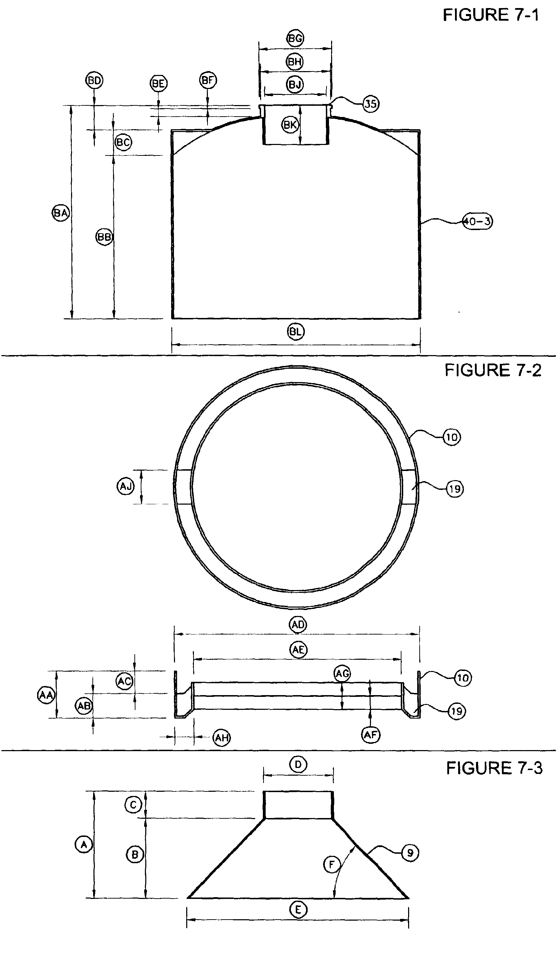

### Figure 7-1. Detail of upper cylindrical portion of reactor tank:

### Dimensions

- BA: 2870 mm
- BB: 2286 mm
- BC: 254 mm
- BD: 330 mm
- BE: 127 mm
- BF: 25 mm
- BG: 1194 mm
- BH: 1041 mm
- BJ: 914 mm
- BK: 457 mm
- BL: 3556 mm

### Components

- 35: Removable cover
- 40-3: Upper cylindrical portion of reactor tank

### Figure 7-2. Detail of effluent weir and trough:

### Dimensions

- AA: 660 mm
- AB: 330 mm
- AC: 330 mm
- AD: 3505 mm
- AE: 2997 mm

- AG: 254 mm
- AF: 127 mm
- AJ: 508 mm

### Components

- 10: Effluent trough
- 19: Effluent trough box. Accommodates effluent bulkhead fitting. Two locations

### Figure 7-2. Detail of effluent weir and trough:

### Dimensions

- A: 1346 mm
- B: 1067 mm
- C: 279 mm
- D: 965 mm
- E: 3100 mm
- F: 45 degree angle

### Components

- 9: Recirculation flow deflector, part of solids/gas/liquid separator

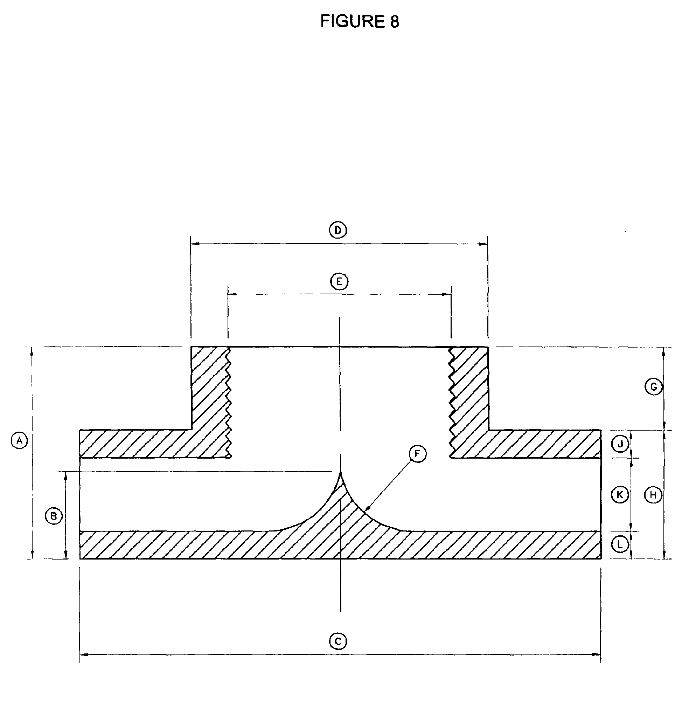

### Figure 8. Detail of flow distribution moulded fitting:

### Dimensions

- A: 146 mm
- B: 60 mm
- C: 356 mm
- D: 203 mm
- E: 150 mm pipe thread
- F: Radius of 50 mm
- G: 57 mm
- H: 89 mm
- J: 19 mm
- K: 51 mm
- L: 19 mm

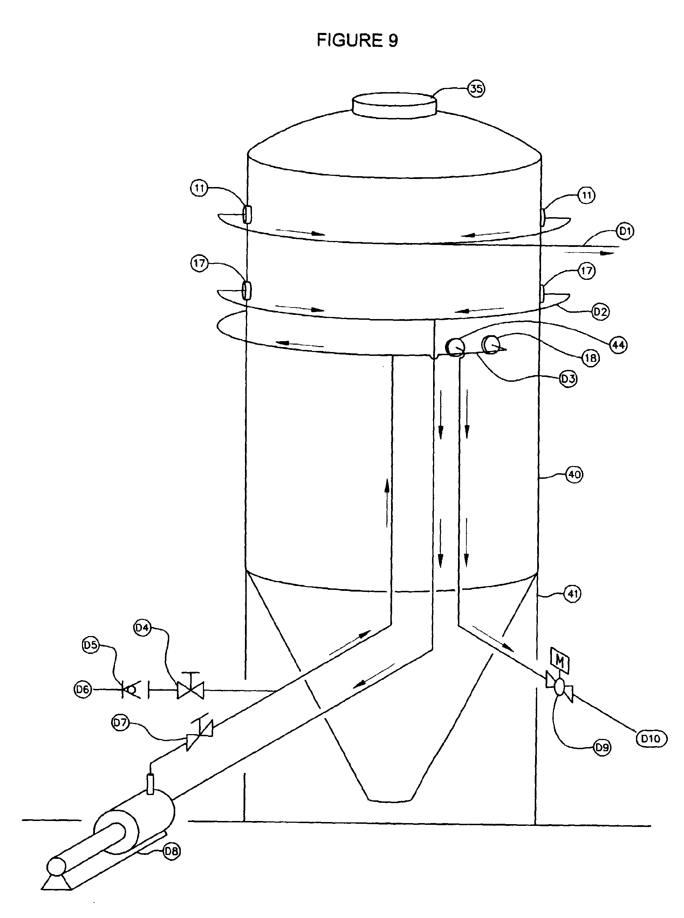

### Figure 9. Isometric view of reactor with external piping:

### External Components

- D1: Treated effluent discharge line
- D2: Recirculation water out of reactor to suction of recirculation pump
- D3: Recirculation water into reactor, discharged by recirculation pump
- D4: Wastewater feed isolating valve
- D5: Wastewater feed check valve
- D6: Wastewater feed
- D7: Recirculation flow control valve
- D8: Recirculation pump
- D9: Solids wastage motorised valve operated on timer
- D10: Wasted solids storage and processing

### Components

- 11: Effluent line connection (bulkhead fitting). Two locations
- 17: Recirculation line suction connection. Bulkhead fitting connects to suction of recirculation pump. Two locations
- 18: Recirculation line discharge connection. Bulkhead fitting connects to discharge of recirculation pump. Two locations
- 35: Removable cover
- 40: Reactor tank, cylindrical middle portion
- 41: Reactor tank metal base
- 44: Excess solids wastage port. Bulkhead fitting placed in box 39. Two locations

The biological fluidised bed apparatus depicted in the figures is a modular, prefabricated reactor. The dimensions shown in Figure 2 correspond to the largest unit, for example, that can be pre-fabricated and transported from the manufacturing facility to the project site. The dimensions in Figure 2 and other figures are for reference only. Reactors of any size can be manufactured maintaining proportional dimensions as shown in the figures.

Projects that require larger treatment volume should use two or more units connected in parallel or in series, depending on the application.

A typical embodiment of the biological fluidised bed apparatus is illustrated in Figure 2. This drawing shows part of the reactor base, access ladder and safety railing at the top of the unit. Although the reactor design presented in the drawings was developed for low-density linear polyethylene, it can be fabricated in carbon steel plate, stainless steel or fiberglass, or other suitable materials.

Since the present invention focuses on the design and configuration of an optimised biological fluidised bed apparatus, details regarding start-up, operation and biological and hydraulic design parameters will not be given here.

The apparatus has an enclosed conical bottom circular tank supported by a steel stand. The tank has an upper cylindrical portion and a lower conical portion. The conical portion of the reactor rests on a conical shape carbon steel plate, to which 12 legs are welded. The reactor is filled with water and an inert media biocarrier. Preferred media particle sizes are 400 to 600 micrometers (ASTM mesh 30 x 40) and particle specific gravity of 1.4 as in activated carbon, to 2.2 as in zeolite. Before the particles are colonised by bacterial biofilm, the settled media reaches a level (28) in the cylindrical portion of the tank. A recirculation pump draws water from the upper portion of the tank, passed a solids/gas/liquid separator device, and pumps it back into the bottom of the tank. The upflow velocity provided by the recirculation flow increases the porosity of the media and fluidises the bed. The fluidised bed reaches a higher level (27), which is equivalent to an empty bed volume increase of 20 to 30 percent with respect to the original settled bed volume. The degree of the volume increase depends on the pump's flow rate.

During start-up of the apparatus, bacterial seed, consumable substrate, macro-nutrients and micro-nutrients are supplied. Biofilm grows attached to each media particle to a thickness ranging between 100 and 200 micrometers. The thickness of the biofilm depends on the initial concentration of the substrate treated in the apparatus, the type of bacteria (i.e., pure acidogenic, methanogenic or denitrifying), and the intensity of the attrition between particles in the bed. The density of the biofilm is only slightly higher than the density of water. As a result, since the inert particle experiences an increase in volume without a significant increase in weight, the specific gravity of the bio-particle as a whole is reduced. This enables the colonised bed to be fluidised with lower upflow velocities than the original bare-particle bed. Additionally, at the same bed porosity, the fluidised empty bed volume increases due to biofilm thickness.

Water level inside the apparatus (24) is determined by the location of the overflow weir (34) in the effluent trough (10). In order to start-up the reactor, anaerobic bacteria or denitrifying bacteria are seeded into the unit. Raw waste is fed into the recirculation line (see Figure 9). The wastewater fed into the line flows out of the reactor over the effluent weir (34), after being treated.

From the bottom of the tank up to the collar that causes gas bubbles to coalesce (6), upflow velocity is controlled by the flow rate provided by the recirculation pump and the cross-sectional area at each level of the tank. A ball valve at the discharge of the recirculation pump controls the flow rate through the recirculation system (see Figure 9). Recirculation flow is maintained constant at a rate sufficient to achieve the desired fluidisation of the media (e.g., bed porosity) in the cylindrical portion of the tank.

Recirculating water is suctioned from the return solids accumulation boxes (4) through two bulkhead fittings (17), which are piped to the suction port of the recirculation pump. The discharge of the pump is piped to two bulkhead fittings (18). An internal horizontal pipe connects both bulkhead fittings (18) to a PVC cross fitting (33). The cross fitting directs the flow downward through a vertical pipe (1). The down-coming pipe (1) ends in a moulded flow distribution fitting (2). This fitting, which rests at the bottom of the tank, has internal contoured surfaces. In the fitting, the direction of the flow changes 90 degrees, so that it exits radially at the bottom of the cone. Details of this fitting are presented in Figure 8.

The opening at the perimeter of the flow distribution fitting is such that at the lowest recirculation flow-rate, sufficient radial exit velocity is attained to carry (erode) media particles located at the bottom of the tank, around the fitting. Minimum exit velocity for 30 x 40 mesh activated carbon media should be 0.6 m/s. For 30 x 40 mesh zeolite media the minimum exit velocity should be 1.2 m/s. Appropriate upflow velocity in the cylindrical portion of the reactor depends on the type and size of media used and the desired overall bed porosity. For activated carbon media, 30 x 40 mesh, adequate upflow velocity in the cylindrical portion of the reactor is in the order of 8 to 12 meters per hour. For zeolite media. 30 x 40 mesh, the velocity should be between 15 and 20 meters per hour. In a reactor with the dimensions shown in the figures, the upflow velocity required to fluidise a bed with activated carbon media 30 x 40 mesh, can be obtained with 30 to 40 liters per second (e.g., 500 to 600 gallons per minute) of recirculation flow rate.

Above the recirculation outflow ports (17), there is no effect of the recirculation flow. Accordingly, between these ports and the effluent overflow weir, the upflow velocity is much lower. The upflow velocity in this portion of the apparatus is determined by the feeding flow rate of the waste being treated. Normally, for industrial or animal waste, the ratio of recirculation to feed flow ranges from 30/1 to 10/1. A quiescent zone with no gas interference is provided in the upper portion of the tank (7), external to the separator (9). In this zone. the upflow velocity decreases gradually as it approaches the effluent weir. The reducing velocity causes suspended solids to settle, thus providing effluent clarification. A suspended sludge blanket typically forms in this portion of the tank. This blanket provides further removal of solids by solids contact clarification. In order to control the level of the sludge blanket, a submerged solids overflow weir is provided (36). An electrically actuated PVC ball valve opens on a timer sequence, to withdraw solids reaching above the submerged weir level. These solids are wasted. By keeping the sludge blanket level at a controlled height, sufficient clarification depth is allowed above the sludge-water interface.

As shown in Figure 9, the biological fluidised bed apparatus works with a closed-loop recirculation system. Untreated wastewater is pumped into the recirculation pump discharge pipe (Figure 9) where it mixes with partially treated recirculation water withdrawn from two ports (17) in the mid-upper portion of the reactor. The mixture enters the reactor (18) and flows downward through the drop pipe (1) and exits radially through the flow distribution moulded fitting (2). This vertical pipe (1) is submerged in media. By the action of the upflow velocity created by the recirculation flow, the media bed will expand (28) and (27).

Above the expanded bed level (27), intense bubbling occurs, as biogas (in the case of methanogenic reactors) or nitrogen gas (in the case of anoxic denitrifying reactors) is generated and released from the bed. The significant external porosity of the fluidised bed (usually 60 to 70 percent) allows gas bubbles to be release rapidly from them bed. The advantage of maintaining such high bed porosities is that coalescence of fine bubbles into larger bubbles inside the bed is minimised. If gas is trapped inside the bed, larger bubbles form by coalescence. Due to their increased buoyancy, larger bubbles emerge through the bed at high velocities and disrupt the bed. Solids that are entrapped in the bed are released by the disturbance, thus increasing suspended solids carry over.

Gas bubbles emerging from the fluidised bed rise through the water. Bubbles rising along the periphery of the bed are deflected to the centre of the tank by the sloped bottom of the solids trough (3). The solids trough continues upward into the sloped lower wall of the separator (5). This conical shaped wall ends in a short cylindrical collar (6). Due to the shape of the lower separator wall (5), the section through which the flow needs to pass is reduced. The reduction in cross-section forces the fine gas bubbles traveling in the flow to coalesce. Larger coalesced bubbles formed are released from the water at high velocity through the collar, into the gas space (8) above the water level. Gas is removed from the reactor through a valve (23). The diameter of the separator collar is such that at the recirculation flows required to fluidise the bed, water emerges at 0.15 to 0.2 m/s. Water spills over the collar and falls into the downflow passage of the separator (37), formed by the lower (5) and upper (9) sloped walls of the separator. Water flows down the sloped passage and exits at a velocity of approximately 0.015 m/s into the solids trough (3). Once it reaches the trough, it moves toward the two diametrically opposed recirculation suction bulkhead fittings (17), located inside the solids return boxes (4). The bulkhead fittings are connected to the suction of the recirculation pump.

Above the solids trough (3), the flow that continues ascending to the effluent overflow weir is only the wastewater feed flow. That flow is extremely low (1/10 to 1/30 of the recirculation flow, depending on the strength of the wastewater). Suspended solids carried in the full flow descending along the sloped down-flow passage of the solids separator hit the solids trough and most of them remain in the trough. There is no sufficient upflow velocity above the level of the trough to carry large solids to the surface of the tank. Ascending flow has to go through the clarification zone (7) to reach the effluent weir. The upflow velocity at the bottom of the clarification zone is 3 m/h, and it decreases to 1.2 m/h as it approaches the effluent weir. As explained above, the solids that are dragged by this low upflow velocity create a sludge blanket as the upflow velocity in this zone decreases. The sludge blanket enhances suspended solids removal by solids contact clarification.

A solids collection paddle (13) pushes the larger solids that remain in the solids trough (3) into solids collection boxes (4). The solids trough has a total of 4 collection boxes. Two boxes collect solids to be returned into the bed by the recirculation pump, and two other boxes collect solids to be wasted. The four boxes are placed in such a way that most of the solids settling in the solids trough are pushed into the solids return boxes. Electrically actuated ball valves, placed in the two solids wastage boxes and operated on a timed sequence, remove the solids accumulated in these boxes. Solids wastage boxes (39) are shown in Figures 3 and 6-1. The solids wastage port (44) is shown in Figures 1 and 3. Tip speed of the solids accumulation paddle is 10 feet/min. A motor/gear reducer drive (20) turning at 0.25 RPM provides the mechanical energy. The drive is mounted externally on the cover plate of the tank (35). A driving shaft (21) with a positive drive mechanism locks with a free rotating hub (38), furnished with axial bearings. An arm (22) connects the hub with the paddle (13). The arm rests on two sets of plastic rollers (31). The rollers move along the external surface of the lower cone of the separator (5).

At the surface of the water inside the tank (24), scum and other floatables passing the separator and the quiescent clarification zone. may accumulate and form a crust. An effluent launderer baffle placed along the effluent weir (14) avoids floating solids to exit the reactor over the weir. A surface skimmer (12) rotates along with the solids accumulation paddle. The skimmer is driven by a connecting arm (30), which is bolted to the frame of the paddle. This arm also rests on two sets of rollers. These rollers slide on the external surface of the upper cone of the separator (9). The skimmer pushes floating material into a scum box (15). The floating material collected in this box is removed by gravity through a bulkhead fitting (16). An electrically actuated valve, operating on a timed sequence, opens and empties this box.

In order to exit the apparatus, the effluent has to flow under the launderer and over the effluent weir (34) into the effluent trough (10). Two effluent ports with bulkhead fittings are provided (11). To assure that the effluent trough is emptied completely these bulkhead fittings are placed inside two depressions (19) provided in the trough.

With the biological fluidised bed apparatus, as described above, the disadvantages of existing patented fluidised bed reactor configurations are greatly overcome. This design provides cleaner effluents and offers a more reliable operation. This compact wastewater treatment apparatus could favourably replace other high-energy consuming treatment technologies.

## Claims

1. A biological fluidised bed apparatus for the treatment of wastewater comprising:
a reactor tank having a conical bottom with angles ranging from 30 to 80 degrees from the horizontal;
an inert media bed within said tank; and
a recirculation pipe within said tank having an upper inlet, and a lower conformed outlet fitting within said media.

2. An apparatus according to claim 1, wherein the reactor tank has a conical bottom with angles ranging from 45 to 75 degrees from the horizontal.

3. An apparatus according to claim 2, wherein the reactor tank has a conical bottom with angles ranging from 55 to 72 degrees from the horizontal.

4. An apparatus according to claim 3, wherein the reactor tank has a conical bottom with angles ranging from 57 to 70 degrees from the horizontal.

5. An apparatus according to claim 4, wherein the reactor tank has a conical bottom with an angle of 60 degrees from the horizontal.

6. An apparatus according to any preceding claim, wherein the recirculation pipe is vertically oriented, and the conformed outlet changes the flow direction from vertical to radial.

7. An apparatus according to claim 6, wherein the conformed outlet is contoured internally to reduce friction losses and smoothen the change of direction of the flow lines.

8. An apparatus according to any preceding claim, further comprising a solids collection trough located above said media bed, said trough having a solids thickening means and a sloped bottom for deflecting gas bubbles to the centre of the tank.

9. An apparatus according to claim 8, further comprising a conical solids/gas/liquid separation means disposed above the said solids trough, said conical separation means having an upper and a lower cone creating a down-flow compartment to direct suspended solids into said solids trough.

10. An apparatus according to claim 9, further comprising a quiescent zone forming a sludge blanket clarification means within said tank external to said conical separation means, said quiescent zone having a treated effluent weir, a rotating surface skimmer and a scum collection means.

11. An apparatus according to any of claims 8 to 10, further comprising a recirculation outflow port within said solids trough, in the mid-upper part of the said tank.

12. An apparatus according to claim 11, further comprising a pump for withdrawing water from the said recirculation outflow port, said pump having a discharge pipe connected to said recirculation pipe inlet, forming a means for fluidising said media bed.

13. An apparatus according to claim 12, further comprising a means for introducing untreated wastewater into said pump discharge pipe.
